# EUROPEAN PATENT APPLICATION

(11) **EP 4 813 559 A1**
(43) Date of publication of application: **30.09.2026**
(21) Application number: 25165871.2
(22) Date of filing: 25.03.2025
(51) Int. Cl.: B23K 26/04, B23K 26/146

(54) **A METHOD FOR ALIGNING A LASER BEAM WITH A NOZZLE APERTURE USING A COMPACT OPTICAL HEAD**

(71) Applicant: Synova S.A., 1266 Duillier (CH)
(72) Inventor: Richerzhagen, Bernold, 1874 Champéry (CH); Laporte, Grégoire, 1008 Prilly (CH); Gaulier, Geoffrey, 1291 Commugny (CH)
(74) Representative: Roth, Sebastian

(57) **Abstract**

The disclosure relates to an optical head for an apparatus employing a liquid-jet guided laser beam, and a method for aligning the laser beam with an aperture of a nozzle producing the liquid jet. The laser beam is provided by an optical fiber connected to the optical head. The method comprises arranging a power sensor in the liquid jet, laterally and axially moving the optical fiber in the optical head, or laterally and axially moving a collimation lens in the optical head, or a combination of the two, and measuring a laser power of the laser beam in the liquid jet with the power sensor, while moving the optical fiber and/or the collimation lens. The method further comprises determining when the laser beam is aligned with the aperture of the nozzle, based on evaluating the measurement of the laser power, while moving the optical fiber and/or the collimation lens, and a reference power of the laser beam.

## Description

### TECHNICAL FIELD

The present disclosure relates generally to an apparatus and a method for machining workpieces with a laser beam, wherein the laser beam is guided in and by a liquid jet. The disclosure particularly provides an optical head for such an apparatus, and a method for aligning the laser beam with an aperture of a nozzle that produces the liquid jet, using the described optical head.

### BACKGROUND

An apparatus providing a liquid-jet guided laser beam is used in various industries for material removal applications, such as cutting, ablating, drilling, or marking. The liquid-jet guided laser beam offers high precision and speed for many machining and manufacturing processes, and is applicable for different kinds of workpieces, particularly, workpieces made of hard materials or composites.

An optical head is an important component of such an apparatus. The optical head is used to couple the laser beam, which is typically provided by an optical delivery fiber that is connected to the optical head, into the liquid jet, which is typically produced by a nozzle. Different variants of such optical heads exist, for instance, high power and fully motorized optical heads, and manual and low power optical heads.

Specifically, the in-coupling of the laser beam into the liquid jet occurs in a coupling unit, which is attached at an extremity of the optical head and comprises the nozzle. An aperture of the nozzle generates the liquid jet, and optical elements of the optical head are designed focus the laser beam through the nozzle aperture into the liquid jet. The liquid jet behaves as an optical fiber composed of liquid and air, and is able to guide the laser beam within a thin cylinder of liquid towards a workpiece.

The mechanical constructions of conventional optical heads do not allow for an initial accurate positioning of the aperture of the nozzle with the laser beam when first connecting the optical delivery fiber with the optical head. Therefore, it is necessary to perform an alignment operation, to accurately align the laser beam with the nozzle aperture. This alignment operation must typically be done anytime a nozzle replacement is done, or when the optical delivery fiber is reconnected.

Exemplary alignment operations include, on low-power manual optical heads, a motorized lateral alignment and manual axial alignment of the laser beam, and on high-power motorized heads, a fully motorized alignment. However, the conventional mechanical constructions, and the imaging system embedded for aligning the laser beam with the nozzle aperture, make these optical heads bulky and expensive.

### SUMMARY

In view of the above, an objective of this disclosure is to design a compact optical head. Another objective is to enable an alignment operation for such a compact optical head, which achieves an accurate alignment of the laser beam with the nozzle aperture, while minimizing the volume and cost of the corresponding optical head.

These and other objectives are achieved by the solutions described in the independent claims. Advantageous implementations are described in the dependent claims.

A first aspect of this disclosure provides a method of aligning a laser beam, which is provided by an optical fiber connected to an optical head, with an aperture of a nozzle producing a liquid jet, the method comprising: arranging a power sensor in the liquid jet; laterally and axially moving the optical fiber in the optical head, or laterally and axially moving a collimation lens in the optical head, or a combination of the two; measuring a laser power of the laser beam in the liquid jet with the power sensor, while moving the optical fiber and/or the collimation lens; and determining when the laser beam is aligned with the aperture of the nozzle, based on evaluating the measurement of the laser power, while moving the optical fiber and/or the collimation lens, and a reference power of the laser beam.

The alignment operation allows accurately positioning the focused laser beam with respect to the nozzle aperture, both axially and laterally. The alignment operation relies on moving the optical fiber and/or the collimation lens, but does not require tilting mirrors or a displacement of the objective as is the case for conventional optical head devices. Moreover, the alignment operation does not require a camera. As a consequence, the alignment operation enables a compact optical head, as described later. Further, this leads to improved machining efficiency, as a reduced laser power loss is possible.

The laser beam may exemplarily have a nominal laser power (as output by the optical fiber) in a range of 1-2000 W. The aperture of the nozzle may define a diameter of the liquid jet, and may have, for example, a diameter of 10-200 µm. The liquid jet may have, for example, a diameter of about 0.6-1 times the diameter of the aperture. The liquid jet may be a water jet, i.e., the liquid used by the apparatus may be water, or may be an oil-water mix. A pressure of the liquid jet output by the nozzle may be in a range of 50-800 bar. The nozzle may be arranged in a coupling unit, which can be attached to the optical head, and the laser beam may be optically coupled into the liquid jet in the coupling unit. For this, no lens has to be arranged in the coupling unit, as at least one lens in the optical head may focus the laser beam into the nozzle aperture.

In an implementation of the method, the optical head comprises the collimation lens for collimating the laser beam provided by the optical fiber, and an objective for focusing the collimated laser beam into the aperture of the nozzle, which is connected to the optical head; axially moving the optical fiber and/or the collimation lens changes a distance between an end of the optical fiber outputting the laser beam and the collimation lens; and laterally moving the optical fiber and/or the collimation lens is perpendicular to axially moving respectively the optical fiber and/or the collimation lens.

The alignment operation does not rely on the objective being moved, or on additional tilting mirrors in the optical heads, which would lead to a bending of the light path in the optical head and would thus make the optical head bulkier. The alignment operation can be carried out by moving the optical fiber and/or the collimation lens.

In an implementation of the method, the method comprises determining a first position of the optical fiber and/or the collimation lens, at which the laser beam is roughly aligned with the aperture of the nozzle, when the measured laser power reaches a first value of 85% or more of the reference power while moving the optical fiber and/or the collimation lens.

This first value could be predetermined, but this is not necessary. The first value could simply be any value above the 85% threshold.

In an implementation of the method, the method further comprises: axially moving the optical fiber and/or the collimation lens, to first increase a distance between the end of the optical fiber and the collimation lens, until the laser power reaches a predetermined second value smaller than the first value, and to then decrease again the distance between the end of the optical fiber and the collimation lens by a predetermined amount; and determining, as a second position of the optical fiber, the position of the optical fiber after decreasing the distance by the predetermined amount, wherein in the second position, the focus of the laser beam is axially aligned with the nozzle and the laser power reaches a third value higher than or equal to the first value.

The second value could correspond to a laser power loss of 10% or more compared to the first value.

In an implementation of the method, the method further comprises: laterally moving the optical fiber and/or the collimation lens into a first direction along a first axis, until the laser power reaches a predetermined fourth value smaller than the third value; laterally moving the optical fiber and/or the collimation lens into a second direction along the first axis, the second direction being opposite to the first direction, until the laser power first reaches again the third value, and then reaches again the predetermined fourth value; and determining, as a third position of the optical fiber at which the laser beam is laterally aligned along the first axis with the aperture of the nozzle, the middle position on the first axis between the two positions that correspond to the laser power having the predetermined fourth value, wherein in the third position the laser power reaches a fifth value higher than the third value.

The fourth value could correspond to a laser power loss of 50% or more compared to the third value or to first value.

In an implementation of the method, the method further comprises: laterally moving the optical fiber and/or the collimation lens into a first direction along a second axis, perpendicular to the first axis, until a power loss of the laser power reaches a predetermined sixth value smaller than the fifth value; laterally moving the optical fiber and/or the collimation lens into a second direction along the second axis, the second direction being opposite to the first direction, until the laser power reaches again the fifth value, and then reaches again the predetermined sixth value; and determining, as a fourth position of the optical fiber at which the laser beam is laterally aligned along the second axis with the aperture of the nozzle, the middle position on the second axis between the two positions that correspond to the laser power having the predetermined sixth value, wherein in the fourth position the laser power reaches a seventh value higher than the fifth value.

The sixth value could correspond to a laser power loss of 50% or more compared to the third value or to the first value. The sixth value could be greater or equal to the fourth value.

In an implementation of the method, in an aligned position of the optical fiber, at which the laser beam is accurately aligned with the aperture of the nozzle, the laser beam is laterally aligned along both the first and second axis with the aperture of the nozzle, and the focus of the laser beam is axially aligned with the aperture of the nozzle.

In this disclosure, "accurately aligned" and "roughly aligned" are to be understood relative to another. The accurately aligned position is optimized compared to the roughly aligned position, i.e., the measured laser power in the liquid jet is at least equal to, usually higher than, in the roughly aligned position. However, already the roughly aligned position may be good enough for manufacturing a workpiece with the liquid-jet guided laser beam.

In an implementation of the method, the steps of axially aligning the focus of the laser beam with the aperture and then laterally aligning the laser beam with the aperture of the nozzle along the first and second axis are repeated sequentially one or more times.

This may ensure that initial decentering does not compromise the alignment precision of the alignment operation of the method of the first aspect.

In an implementation of the method, a resolution of the power sensor is at least 1:100 of the reference laser power of the laser beam, or is at least 10 µW.

This measurement precision guarantees a sufficient alignment precision.

In an implementation of the method, the reference power is in a range of 0.75 - 1.25 mW measured after the objective of the optical head.

This ensures sufficient laser power for precise alignment of the laser beam with the aperture of a nozzle while being low enough to be safe for the human eye.

In an implementation of the method, the power sensor is placed in the liquid jet at a distance within a range of 5 - 15 mm to the aperture of the nozzle.

A second aspect of this disclosure provides an optical head for aligning a laser beam, provided by an optical fiber connectable to the optical head, with an aperture of a nozzle for producing a liquid jet, the nozzle being connectable to the optical head, wherein the optical head comprises: a collimation lens configured to collimate the laser beam, when the optical fiber is connected to the optical head; an objective configured to focus the collimated laser beam into the aperture of the nozzle, when the nozzle is connected to the optical head; wherein the optical fiber, when connected to the optical head, the collimation lens, and the objective are all coaxially aligned; the optical head further comprising: an axial translation stage for axially moving the optical fiber and/or the collimation lens in the optical head, wherein the axial movement changes a distance between an end of the optical fiber and the collimation lens; and a lateral translation stage for laterally moving the optical fiber and/or the collimation lens in the optical head perpendicular to the respective axial movement.

Due to the coaxial alignment, the optical head can be very compact. The coaxial alignment is possible, as the optical head does not require tilting mirrors. The omission of tilting mirrors is enabled by the method of the first aspect. The optical head does also not require means to displace or otherwise move the objective, which may have at least one lens.

In an implementation of the optical head, a beam axis of the laser beam is straight within the optical head.

This implies that the optical head has no tilting mirrors, or other optical components which bend the light path in the optical head.

A third aspect of this disclosure provides a controller for an apparatus for machining a workpiece with a liquid-jet guided laser beam, wherein the apparatus comprises an optical head according to the second aspect, and wherein the controller is configured to: control the translation stages of the optical head to laterally and axially move the optical fiber and/or the collimation lens in the optical head; and determine when the laser beam is aligned with an aperture of a nozzle connected to the optical head, based on evaluating a measurement of a laser power of the laser beam, while moving the optical fiber and/or the collimation lens, and a reference laser power, wherein the laser power is measured by a power sensor arranged in the liquid jet.

The controller is configured to implement the alignment operation of the method of the first aspect, and can thus improve the apparatus in terms of efficiency.

A fourth aspect of this disclosure provides a computer program comprising instructions which, when the program is executed by a processor, for example of the controller of the third aspect, cause the controller to execute the method of the first aspect to control the translation stages of the optical head of the second aspect.

### BRIEF DESCRIPTION OF THE DRAWINGS

The above described aspects and implementations are explained in the following description of embodiments with respect to the enclosed drawings:
- FIG. 1: shows an optical head according to this disclosure.
- FIG. 2: shows details of an exemplary optical head according to this disclosure.
- FIG. 3: illustrates a method for aligning a laser beam with an aperture of a nozzle, according to this disclosure.
- FIG. 4: shows an example of an optical head according to this disclosure with a power sensor (a), shows a measured laser power as a function of lateral position (b), and shows a measured laser power as a function of the (axial) distance between the optical fiber and the collimation lens (c).
- FIG. 5: illustrates a footprint reduction of the optical head according to this disclosure compared to conventional optical heads.

### DETAILED DESCRIPTION OF EMBODIMENTS

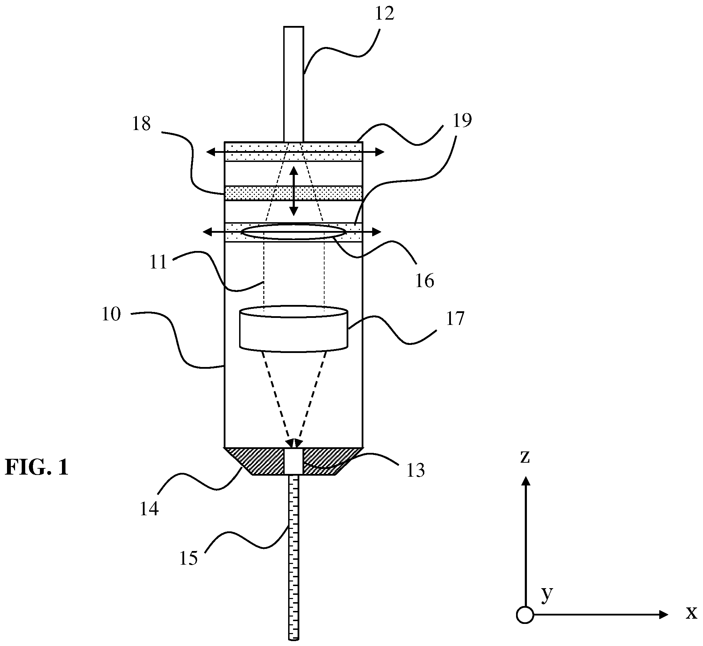

FIG. 1 shows an optical head 10 according to this disclosure. The optical head 10 is suitable for an apparatus configured to machine a workpiece with a liquid-jet guided laser beam, which is also referred to as wet-laser machining in comparison to dry-laser machining (i.e., machining with only a laser beam, without a guiding liquid). The liquid may be water or a water-oil-mix. The workpiece may be a made of a material including, for example, metals, ceramics, diamonds, semiconductors, carbides, alloys, superalloys, or ultra-hard materials. The workpiece is not a part of such an apparatus.

The optical head 10 of this disclosure is specifically designed for accurately coupling a laser beam 11, with which the apparatus machines the workpiece, into the liquid jet 15 that guides the laser beam 11. The liquid jet 15 is pressurized and acts like a waveguide for the laser beam 11, and can thus guide the laser beam 11 onto the workpiece by means of total internal reflection. The liquid jet 15 is provided by a nozzle 14, and the laser beam 11 is provided by an optical fiber 12. Both the nozzle 14 and the optical fiber 12 are connectable to the optical head 10.

The optical head 10 itself comprises a collimation lens 16, which is configured to collimate the laser beam 11 provided by the optical fiber 12, when the optical fiber 12 is connected to the optical head 10. The optical head 10 further comprises an objective 17, which is configured to focus the collimated laser beam 11 into an aperture 13 of the nozzle 14, when the nozzle 14 is connected to the optical head 10. As schematically illustrated, when the optical fiber 12 is connected to the optical head 10, the collimation lens 16, the objective 17, and the optical fiber 12 are all coaxially aligned, i.e., their optical axis constitute a straight path through the optical head 10.

The objective 17 may include at least one lens, e.g. one lens or a group of lenses, for focusing the laser beam 11. The at least one lens of the objective 17 may be arranged such that it is protected from the liquid inside the nozzle 14. For instance, the at least one lens of the objective 17 may be separated by an optical window from the nozzle 14, wherein the optical window prevents contact of the at least one lens and the liquid, but allows the laser beam 11 to pass through.

The nozzle 14 may be included in a coupling unit attachable to the optical head 10. The nozzle 14 is provided with the liquid, so as to form the liquid jet 15. This may be achieved by means of the apparatus - in which the optical head 10 can be installed - to have, for example, a liquid supply providing the liquid to the nozzle 14. Additionally, the apparatus may also include a gas supply, which may provide a protection gas, for example helium, to an area that is passed by the generated liquid jet 15 after leaving the nozzle 14. The protection gas can protectively envelop the liquid jet 15.

The optical head 10 further comprises an axial translation stage 18 for axially moving at least one of the optical fiber 12 and the collimation lens 16 in the optical head 10. The axial movement changes an (axial) distance between (an end of) the optical fiber 12 and the collimation lens 16. Axially means along the z-axis indicated by the coordinate system in FIG. 1, wherein the z-axis may be parallel to the optical axis of the optical head 10 and/or to the pressurized liquid jet 15. The axial translation stage 18, if configured to move the optical fiber 12, may be a part of a connector for connecting the optical fiber 12 to the optical head 10. The connector may be part of the optical head 10.

The optical head 10 also comprises a lateral translation stage 19 for laterally moving at least one of the optical fiber 12 and the collimation lens 16 in the optical head 10, wherein the lateral movement is perpendicular to the respective axial movement described above. In particular, the lateral movement is along the x-axis and/or along the y-axis indicated by the coordinate system in FIG. 1, i.e., is a movement in the x-y-plane.

Due to the alignment of the optical axes of the optical fiber 12, the collimation lens 16, and the objective 17, respectively, the optical head 10 can be built vey compact. No tilting mirrors are required. Due to the translation stages 18, 19, an alignment operation of the laser beam 11 with the aperture 13 of the nozzle 14 can be performed, as explained before with respect to the method of the first aspect and detailed later.

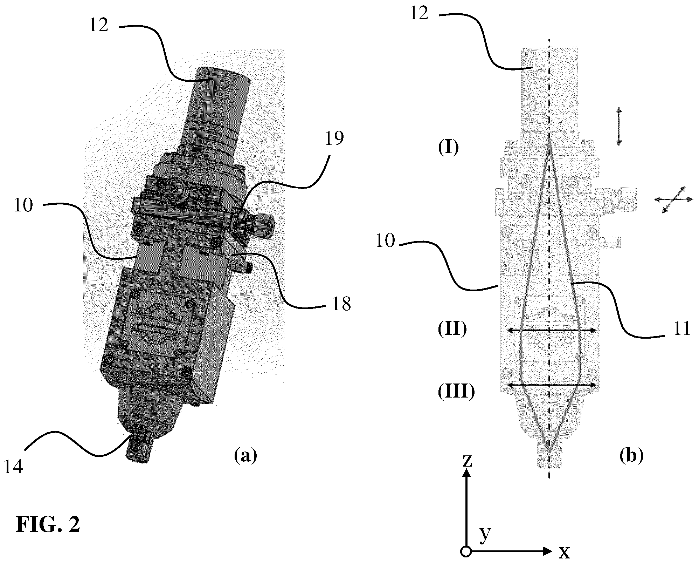

FIG. 2 shows an exemplary optical head 10 according to this disclosure, which builds on the optical head 10 of FIG. 1. Same elements in FIG. 1 and FIG. 2 share the same reference signs and may be implemented likewise. In particular, FIG. 2(a) shows a mechanical envelope of the optical head 10, and FIG. 2(b) shows a light path inside the optical head 10. The laser light outputs form a core of the optical fiber 12 (see section I of FIG. 2(b)), it is transformed into a parallel laser beam 11 by the collimation lens 16 (see section II of FIG. 2(b)), and it is then focused by the objective 17 into the liquid jet 15 (see section III of FIG. 2(b)).

For the optical head 10 of this disclosure, an optical line (sequence of optical elements) remains similar than for conventional optical heads. The collimation lens 16 is designed to collimate the divergent output of the optical fiber 12, and the objective 17 is designed to focus the laser beam 11 into the nozzle 14, particularly, the nozzle aperture 13. The nozzle 14 may be separated by an optical window from the optical head 10, when attached.

The collimation lens (e.g., *f =* 150 mm) and the objective 17 (e.g., *f =* 25 mm) may be optical components, which are re-used from a low-power manual conventional optical head, as the robustness of such components on the field has been proven. In the above example, the overall magnification of the imaging system in the optical head 10 may be 1/6, which would result in a reduction of laser beam 11 from, for example, a 150 µm fiber core diameter to a 25 µm diameter in the plane of the aperture 13 of the nozzle 14.

Advantageously, the ability of the optical head 10 to perform an alignment operation of the laser beam 11, allows using the same nozzle 14 - or the same coupling unit including the nozzle 14 - as is used already for a conventional optical head. The alignment operation is particularly usable to align the laser beam 11 with the aperture 13 of the nozzle 14. The alignment operation is explained in the following, and may be facilitated by the use of a low power laser, which may be detected by a power sensor inserted into the liquid jet 15, for instance, by a standard calibrated and waterproof photodiode. The position of the optical fiber 12 and/or the collimation lens 16 may be adjusted in the three axis (x, y, z) by the translation stage 19 (could have to sub-translation stages, if both components are moved). The lateral adjustments may be made using the translation stage 18, which may be implemented in a connector for the optical fiber 12.

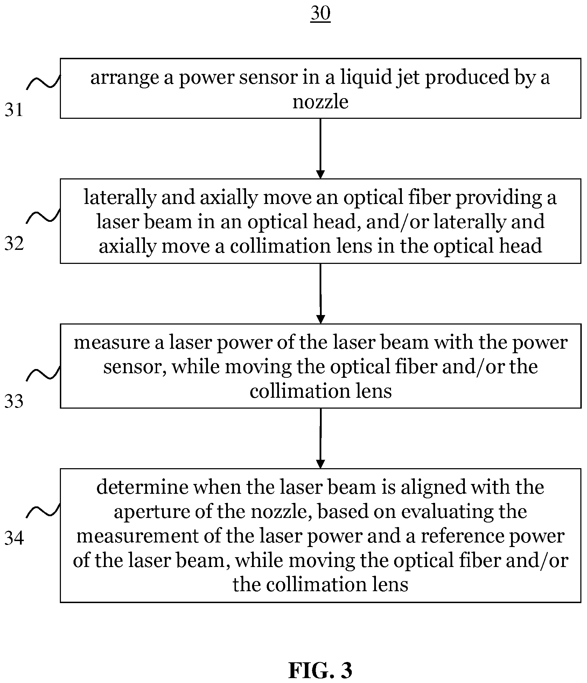

FIG. 3 shows a general method 30 of aligning the laser beam 11, i.e. a general alignment operation. The laser beam 11 is provided by the optical fiber 12 connected to the optical head 10, and the aperture 13 of the nozzle 14 produces the liquid jet 15. Notably, the alignment operation can be performed while the liquid jet 15 is already produced by the nozzle 14.

The method 30 comprises a step 31 of arranging the power sensor in the liquid jet 15. This may be done manually or automatically.

The method 30 further comprises a step 32 of laterally and axially moving the optical fiber 12 in the optical head 10, or laterally and axially moving the collimation lens 16 in the optical head 10, or a combination of the two. To this end, the means to move the optical fiber 12 and/or the collimation lens 16, which are provided in the optical head 10, may be used. For instance, the above-described translation stages 18 and 19.

The method 30 further comprises a step 33 of measuring a laser power of the laser beam 11 with the power sensor, while moving the at least one of the optical fiber 12 and the collimation lens 16. The power sensor may continuously measure the laser power or repeatedly.

The method 30 further comprises a step 34 of determining when the laser beam 11 is aligned with the aperture 13 of the nozzle 14, based on evaluating the measurement of the laser power, while moving the optical fiber 12 and/or the collimation lens 16, and based on a reference power of the laser beam 11. The evaluating may be performed by a processor, for instance, a controller of the apparatus that comprises the optical head 10. The reference power of the laser beam 11 may be a predetermined laser power or may be a laser power initially measured by the power sensor without the nozzle 14 being attached to the optical head 10.

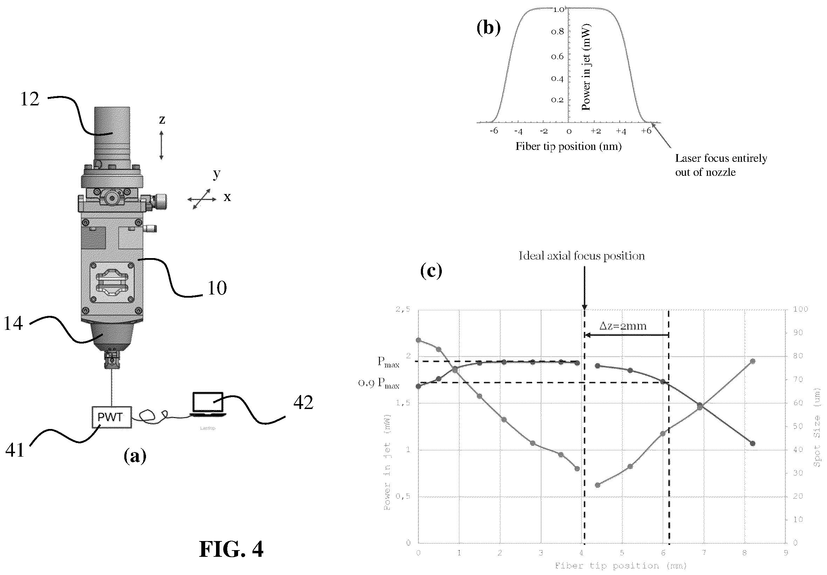

An exemplary implementation of the method 30 for aligning the laser beam 11 with the aperture 13 is explained in the following with respect to FIG. 4. In this example, only the optical fiber 12 is moved, however, the example could easily be extended to moving alternatively or additionally also the collimation lens 16.

The power sensor 41 is coupled to a processor 42, for example, to a computer or a controller, which is able to evaluate the readings of the power sensor 41. The power sensor 41 may be a photodiode, or other conventional power sensor 41. The power sensor 41 may be waterproof.

The resolution of the power sensor 41 is beneficially smaller than 1:100 of the total laser power used, so as to guarantee a sufficient alignment precision of the alignment operation. The power sensor 41 may have, for example, a resolution of 10 µW.

The laser power behind the objective 17 of the optical head 10 - without the nozzle 14 (coupling unit) being connected to the optical head 10 - is initially set, for example, to around 0.75 - 1.25 mW (e.g., to follow current standards regarding eye safety), and is measured with the power sensor 41. This may be the reference power of the laser beam 11.

The nozzle 14 is installed, the liquid jet 15 is produced, and the power sensor 41 is introduced into the liquid jet 15. The power of the laser beam 11 in the liquid jet 15 is measured, for example, at a distance of 10 mm below the nozzle 14. The optical fiber 12 is moved laterally and axially successively to improve the optical signal into the liquid jet 15, e.g., until the measured laser power reaches a first value. As an example, the coupling efficiency into the liquid jet is beneficially 85% or more, i.e., the first value may be 85% or more of the reference laser power.

Further, to ensure that the beam is accurately centered in the nozzle aperture 13, the following steps may be performed. In the z-axis (axially), the distance between the optical fiber 12 and the collimation lens 16 is increased, until the laser power reaches a second value, e.g., until a power lost from the first value is 10%. The distance is then reduced again by a predetermined amount, e.g. by 2 mm, to ensure that the laser beam 11 is focused into the nozzle aperture 13. The laser power at this position of the optical fiber 12 reaches a third value, which is higher than or equal to the first value.

The optical fiber 12 is then moved laterally in one direction (x- or y- direction) with the translation stage 16, until the laser power in the liquid jet 15 reaches a fourth value, e.g., until the laser power is decreased by more than 50% from the first value. The optical fiber 12 is then moved back in the opposite direction, until the laser power first reaches again the third value, and then reaches again the fourth value. The two positions at which the fourth value was measured are recorded. The laterally aligned optical fiber position is in the middle, and may be reached from the initial direction (to take stage backlash into account). Notably, this procedure is done also in the other lateral direction (x- or y-direction), wherein a fifth value corresponding to the fourth value (could be identical) is measured.

The two steps of axially and laterally positioning the optical fiber 12 may be repeated twice or more (to make sure initial decentering did not compromise alignment precision).

FIG. 4(a) illustrates a schematic of the optical head 10 with the power sensor 41. FIG. 4(b) depicts a laser power in the liquid jet 15 as a function of the lateral position of the optical fiber 12 in the x-y axis. FIG. 4(c) depicts the laser power in the liquid jet 15 as a function of the axial position of the optical fiber 12 along the z axis, which is correlated to the distance between the optical fiber 12 and the collimation lens 16. Based on evaluating the laser power, the alignment of the laser beam 11 with the nozzle aperture 13 may be carried out.

The compactness of the optical head 10 of this disclosure is associated with the alignment operation. Optimization parameters of the alignment rely on moving the optical fiber position, while the observable is the laser power that is coupled in the liquid jet 15.

It was demonstrated experimentally that the micrometric alignment precision is not degraded using this alignment operation, as despite not having a direct vision (like when using a camera for alignment, for instance), the precision is increased by displacing the optical fiber 12 instead of the objective 17 (like done in some conventional approaches). Indeed, as the laser beam 11 is translated before the at least one lens of the objective 17, a lateral displacement of the optical fiber 12 by a certain distance (e.g., 6 µm) corresponds to a smaller displacement (e.g., 1 µm) of the focused laser spot.

Both the absence of a camera and the translation of the optical fiber 12 lead to improvements on the optical head 10. Indeed, since no mirrors are needed, like in some conventional optical heads, the optical head 10 can be made co-axial, which decreases the overall footprint of the optical head 10.

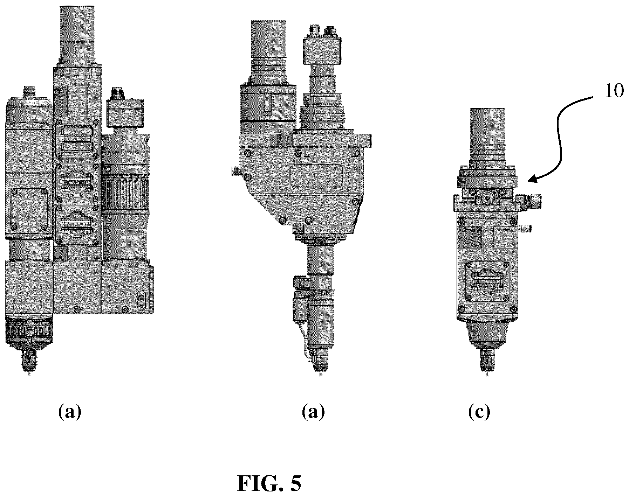

FIG. 5 illustrates this a footprint reduction of the optical head 10 (c) in comparison with conventional optical heads (a) and (b). The conventional optical heads, for x- and y-axis alignment, rely on imaging the laser focus and rely either on tilting mirrors between the collimation lens and the objective, or on moving the objective 17. The more compact optical head 10 relies on moving the optical fiber 12 and/or the collimation lens 16 as explained above.

With the new architecture of the optical head 10, multiple advantages can be achieved. Firstly, since mirrors, imaging optics, and cameras are not required, the price is reduced and the compactness is improved. Secondly, electrical connection are no longer necessary, as camera and the motorized mirrors are omitted. The optical head 10 may now be a standalone component, and can be directly integrated by operators into apparatus for machining workpieces with liquid-jet guided laser beam.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method (30) of aligning a laser beam (11), which is provided by an optical fiber (12) connected to an optical head (10), with an aperture (13) of a nozzle (14) producing a liquid jet (15), the method comprising:
arranging (31) a power sensor (41) in the liquid jet (15);
laterally and axially moving (32) the optical fiber (12) in the optical head (10), or laterally and axially moving a collimation lens (16) in the optical head (10), or a combination of the two;
measuring (33) a laser power of the laser beam (11) with the power sensor (41) in the liquid jet (15), while moving the optical fiber (12) and/or the collimation lens (16); and
determining (34) when the laser beam (11) is aligned with the aperture (13) of the nozzle (14), based on evaluating the measurement of the laser power, while moving the optical fiber (12) and/or the collimation lens (16), and a reference power of the laser beam (11).

2. The method (30) of claim 1, wherein:
the optical head (10) comprises the collimation lens (16) for collimating the laser beam (11) provided by the optical fiber (12), and an objective (17) for focusing the collimated laser beam (11) into the aperture (13) of the nozzle (14), which is connected to the optical head (10);
axially moving the optical fiber (12) and/or the collimation lens (16) changes a distance between an end of the optical fiber (12) outputting the laser beam (11) and the collimation lens (16); and
laterally moving the optical fiber (12) and/or the collimation lens (16) is perpendicular to axially moving respectively the optical fiber (12) and/or the collimation lens (16).

3. The method (30) of claim 1 or 2, wherein the method (30) comprises
determining a first position of the optical fiber (12) and/or the collimation lens (16), at which the laser beam (11) is roughly aligned with the aperture (13) of the nozzle (14), when the measured laser power reaches a first value of 85% or more of the reference power while moving the optical fiber (12) and/or the collimation lens (16).

4. The method (30) of claim 3, wherein the method (30) further comprises:
axially moving the optical fiber (12) and/or the collimation lens (16), to first increase a distance between the end of the optical fiber (12) and the collimation lens (16), until the laser power reaches a predetermined second value smaller than the first value, and to then decrease again the distance between the end of the optical fiber (12) and the collimation lens (16) by a predetermined amount; and
determining, as a second position of the optical fiber (12), the position of the optical fiber (12) after decreasing the distance by the predetermined amount,
wherein in the second position, the focus of the laser beam is axially aligned with the nozzle and the laser power reaches a third value higher than or equal to the first value.

5. The method (30) of claim 3 or 4, wherein the method (30) further comprises:
laterally moving the optical fiber (12) and/or the collimation lens (16) into a first direction along a first axis, until the laser power reaches a predetermined fourth value smaller than the third value;
laterally moving the optical fiber (12) and/or the collimation lens (16) into a second direction along the first axis, the second direction being opposite to the first direction, until the laser power first reaches again the third value, and then reaches again the predetermined fourth value; and
determining, as a third position of the optical fiber (12) at which the laser beam (11) is laterally aligned along the first axis with the aperture (13) of the nozzle (14), the middle position on the first axis between the two positions that correspond to the laser power having the predetermined fourth value,
wherein in the third position the laser power reaches a fifth value higher than the third value.

6. The method (30) of claim 5, wherein the method (30) further comprises:
laterally moving the optical fiber (12) and/or the collimation lens (16) into a first direction along a second axis, perpendicular to the first axis, until a power loss of the laser power reaches a predetermined sixth value smaller than the fifth value;
laterally moving the optical fiber (12) and/or the collimation lens (16) into a second direction along the second axis, the second direction being opposite to the first direction, until the laser power reaches again the fifth value, and then reaches again the predetermined sixth value; and
determining, as a fourth position of the optical fiber at which the laser beam is laterally aligned along the second axis with the aperture of the nozzle, the middle position on the second axis between the two positions that correspond to the laser power having the predetermined sixth value,
wherein in the fourth position the laser power reaches a seventh value higher than the fifth value.

7. The method (30) of the claims 4, 5, and 6, wherein in an aligned position of the optical fiber (12), at which the laser beam (11) is accurately aligned with the aperture (13) of the nozzle (14), the laser beam (11) is laterally aligned along both the first and second axis with the aperture of the nozzle (14), and the focus of the laser beam (11) is axially aligned with the aperture (13) of the nozzle (14).

8. The method (30) of one of the claims 4 to 7, wherein the steps of axially aligning the focus of the laser beam with the aperture and then laterally aligning the laser beam (11) with the aperture (13) of the nozzle (14) along the first and second axis are repeated sequentially one or more times.

9. The method (30) of one of the claim 1 to 8, wherein a resolution of the power sensor (41) is at least 1:100 of the reference laser power of the laser beam (11), or is at least 10 µW.

10. The method (30) of one of the claims 2 to 9, wherein the reference power is in a range of 0.75 - 1.25 mW measured after the objective of the optical head (10).

11. The method (30) of one of the claims 1 to 10, wherein the power sensor (41) is placed in the liquid jet (15) at a distance within a range of 5 - 15 mm to the aperture (13) of the nozzle (14).

12. An optical head (10) for aligning a laser beam (11), provided by an optical fiber (12) connectable to the optical head (10), with an aperture (13) of a nozzle (14) for producing a liquid jet (15), the nozzle (14) being connectable to the optical head (10), wherein the optical head (10) comprises:
a collimation lens (16) configured to collimate the laser beam (11), when the optical fiber (12) is connected to the optical head (10);
an objective (17) configured to focus the collimated laser beam (11) into the aperture (13) of the nozzle (14), when the nozzle (14) is connected to the optical head (10);
wherein the optical fiber (12), when connected to the optical head (10), the collimation lens (16), and the objective (17) are all coaxially aligned;
the optical head (10) further comprising:
an axial translation stage (18) for axially moving the optical fiber (12) and/or the collimation lens (16) in the optical head (10), wherein the axial movement changes a distance between an end of the optical fiber (12) and the collimation lens (16); and
a lateral translation stage (19) for laterally moving the optical fiber (12) and/or the collimation lens (16) in the optical head (10) perpendicular to the respective axial movement.

13. The optical head (10) of claim 12, wherein a beam axis of the laser beam (11) is straight within the optical head (10).

14. A controller (42) for an apparatus for machining a workpiece with a liquid-jet guided laser beam (15), wherein the apparatus comprises an optical head (10) according to any one of the claims 12 and 13, and wherein the controller (42) is configured to:
control the translation stages (18, 19) of the optical head (10) to laterally and axially move the optical fiber (12) and/or the collimation lens (16) in the optical head (10); and
determine when the laser beam (11) is aligned with an aperture (13) of a nozzle (14) connected to the optical head (10), based on evaluating a measurement of a laser power of the laser beam (11), while moving the optical fiber (12) and/or the collimation lens (16), and a reference laser power, wherein the laser power is measured by a power sensor (41) arranged in the liquid jet (15).
